# EUROPEAN PATENT SPECIFICATION

(11) **EP 0 547 808 B1**
(45) Date of publication and mention of the grant of the patent: **13.03.1996**
(21) Application number: 92311051.4
(22) Date of filing: 03.12.1992
(51) Int. Cl.: F23R 3/26

(54) **Combustor with external air staging device**
Brennkammer mit abgestufter Luftzufuhr
Chambre de combustion avec alimentation en air étagée

(30) Priority: 18.12.1991 US 809139
(43) Date of publication of application: 23.06.1993
(73) Proprietor: GENERAL ELECTRIC COMPANY, Schenectady, NY 12345 (US)
(72) Inventor: Slocum, Gale V., Clifton Park, New York 12065 (US); Myers, Albert, Amsterdam, New York 12010 (US); Beebe, Kenneth Winston, Galway, New York 12074 (US)
(74) Representative: Pratt, Richard Wilson

(56) References cited:
- US-A- 4 255 927
- US-A- 4 944 149

## Description

The present invention relates in general to improved combustion control and more specifically, to a gas turbine combustion system comprising an air staging control system which is capable of burning gaseous fuels while minimizing the emission of nitrogen oxides, smoke and other undesirable exhaust pollutants.

The nature of gas turbines is such that they emit small amounts of undesirable pollutants into the surrounding atmosphere. Although smoke, excess carbon monoxide and unburned hydrocarbons all constitute undesirable pollutants in the exhaust of gas turbines, it is the emissions of excess amounts of nitrogen oxides (NOx) which causes particular concern, as a result of the adverse effects attributed to these gases.

It is well known that lowering the temperature of combustion will decrease the concentration of nitrogen oxides in the turbine exhaust gases. It has also been demonstrated that burning the fuel with excess air, i.e., using a fuel-lean mixture in the combustion process, will accomplish a temperature reduction. However, the leanness of the fuel-air mixture required to effect a flame temperature reduction at full turbine load will not support a satisfactory flame under low load or under start-up conditions. When the latter conditions prevail, the turbine will operate at poor combustion efficiency, or not at all, if the same fuel mixture is used as at full losd. Incomplete burning of the fuel mixture will occur, resulting in the presence of excessive amounts of carbon monoxide and unburned hydrocarbons in the turbine exhaust.

Current techniques for obtaining low levels of exhaust pollutants in a gas turbine include:
- water injection into the combustor at additional customer operation cost - see, for example, U.S. Patent Nos. 4,337,618; 4,290,558; 4,259,837; and 4,160,362;
- exhaust stack cleaning at additional installation and operation cost; and
- dry low NOx technology (fuel staging in the combustor) in a narrow, stable operating range - see, for example commonly assigned U.S. Patent Nos. 4,292,801 and 4,982,570.

Existing combustion control systems which attempt to solve the problem of NOx emission by the use of variable geometry. whereby the fuel is burned with excess air, frequently operate with a relatively large variation in the pressure drop across the combustor. This variation occurs as the load on the turbine changes and it has an adverse effect on the overall operation. Further, because the control mechanism employed is usually integral with the combustor, the overall structure is mechanically complex and thus costly to build and maintain. As will be appreciated, combustors operate a harsh external environment, up to 1832°C (1000° F) and17.6 kg/cm (250 p.s.i.a.) pressure. Moreover, the combustion system is surrounded by a pressure vessel which is expensive and difficult to remove for maintenance purposes. The reliability of sensors and mechanical devices in this environment has also proven problematic. Another disadvantage resides in the fact that existing combustors cannot be easily retro-fitted to incorporate this type of control system.

The levels of allowable exhaust pollutants for power generation equipment will be continually reduced on a worldwide basis. However, as noted above, lean, premixed combustion technology results in combustors which are stable only in a very narrow operating range. Operating in this narrow range is difficult because the gas turbines used for power generation are required to deliver power over a wide range and not a single set point.

The operating range of the premixed combustors can be extended through the use of air staging. Air staging in a general sense may be defined as altering the distribution of air entering the combustor in a controlled manner during operation. In commonly assigned U.S. Patent 4,255,927, a combustion system for gas turbines is disclosed in which air flow from the compressor is directed to both the reaction zone and to the downstream dilution zone in a manner which permits variable inverse proportioning of the air supplied to these zones. There are significant hardware requirements in this system. however, for distributing the flow of air between the zones.

In commonly assigned U.S. Patent No. 4,944,149, an air staging apparatus is disclosed wherein a ring provided with a plurality of holes is adjustable axially relative to the combustion liner to selectively cover and uncover dilution air holes in the liner to thereby adjust the amount of air flowing into the dilution zone. Since the movable hardware is located within the liner, maintenance is problematic.

US-A-4255927 discloses a gas turbine system according to the preamble of claim 1. The present invention is characterized by the features of the characterizing portion of claim 1,

Since, essentially, all of the hardware associated with the air staging control system is located externally of the pressure vessel, maintenance and/or replacement of parts is facilitated with an overall reduction in cost.

An embodiment of this invention seeks to provide a simplified apparatus for providing air staging which will not decrease plant reliability or increase maintenance costs.

More specifically, the embodiment seeks to overcome the drawbacks of the prior art without hindering maintenance and reliability caused by mechanisms within the pressure vessel to control air staging. By adding external air staging to existing dry low NOx combustors, it is possible to increase the stable operating range of the combustor. This increase in range is desirable because gas turbines used for power generation must operate over a wide range of conditions, and not merely at a single set point.

In current design gas turbine approximately 90% of the total compressor discharge air must flow through the combustor at all times (the remaining 10% of air is leakage or used for cooling the hot gas path). The external air staging apparatus of this invention will allow the distribution of air into the combustor such that a large percentage of the air (approximately 20%) can bypass the combustion reaction zone by entering the combustor via dilution holes in the dilution zone.

In accordance with one illustrative embodiment of the invention. air staging is provided which requires no internal mechanical devices or sensors. The system is designed to locate these components externally of the pressure vessel where high reliability is demonstrated and maintenance easily achieved. In accordance with the invention, compressor discharge air for air staging is removed from the pressure vessel at (preferably) between 4 and 6 locations about the vessel. The air flows via a corresponding number of pipes to air dilution control valves which control amounts of compressor discharge air subsequently introduced to a common manifold which distributes air to each combustor in the pressure vessel. To this end. each combustor is provided with an annular manifold for feeding air into the combustion chamber through a plurality of dilution air feed tubes.

A better understanding of the present invention will become apparent from the illustrative description of the accompanying drawings, in which
FIGURE 1 is a cross sectional view of a gas turbine combustor provided with external air staging in accordance with an exemplary embodiment of this invention; and
FIGURE 2 is an enlarged detail taken from FIGURE 1.

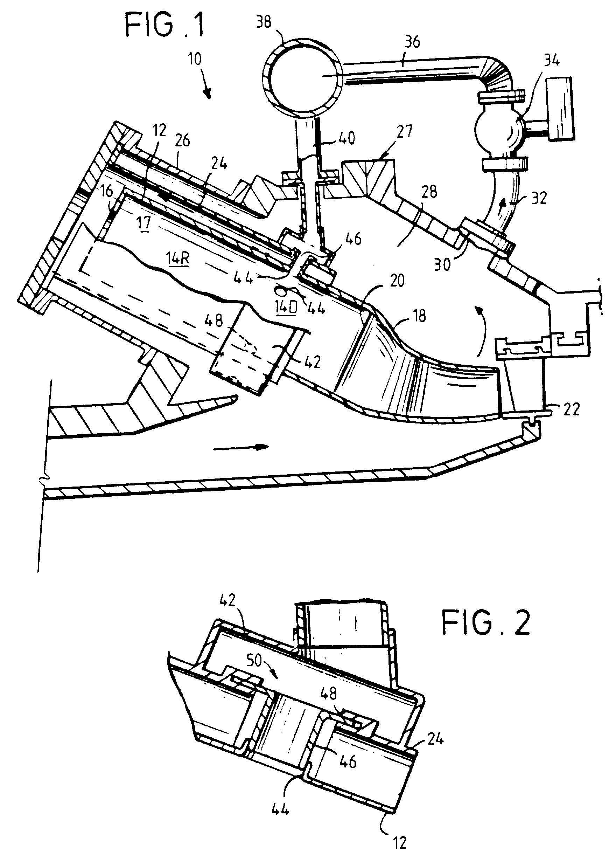

With reference to FIGURES 1 and 2, one combustor of a combustion system in accordance with this invention is shown generally at 10. The combustion system includes a combustion liner 12, generally cylindrical in shape, and which defines a combustion chamber 14. An end wall 16 terminates one end of the chamber 14 and is provided with a fuel nozzle (not shown) for introducing fuel into the combustion chamber in a conventional manner. The opposite end of the combustion chamber 14 opens to a transition piece 18 which couples the exit 20 of the combustion chamber to the input of a turbine, represented here by a single turbine blade 22.

An outer casing or flow shield 24 surrounds the combustion liner 12 in radially spaced relation thereto, permitting air from the compressor to reverse flow around the combustion liner 12 and into the combustion chamber 14 by means of a air swirler which is part of the fuel nozzle, again in a conventional manner. An outer casing 26 of a pressure vessel 27 surrounds the combustion chamber 14 and, in the area adjacent the transition piece 18, defines a chamber 28 where the compressor discharge air reverses direction to flow back toward the fuel nozzle where it ultimately provides air for the combustion process via introduction into the combustion liner 12.

In practice, it will be appreciated that more than one combustor will be associated with a single turbine. For example, each turbine may operate with between 6 and 18 combustors within a pressure vessel.

As is known in the art, the combustion chamber 14 includes a reaction zone 14R and a downstream dilution zone 14D. In accordance with an exemplary embodiment of this invention, compressor discharge air for air staging is removed from chamber 28 at a plurality of vessel extraction ports 30 (one shown). It will be understood that there may be as many as 4-6 extraction ports located about the pressure vessel 27 which surrounds all of the combustors.

Discharge air flowing into each of the extraction ports 30 passes through an associated conduit 32 to a dilution air control valve 34 and from there, via conduit 36 to a manifold 38 which is common to all of the combustors.

Manifold 38, which surrounds all of the combustors in the turbine, distributes air to each combustor via a respective manifold connector pipe 40. Each connector pipe 40, in turn, supplies air to an annular dilution air manifold 42 which surrounds the flow shield 24 of each combustor. The dilution manifold 42 supplies air to the dilution zone 14D of the combustion chamber 14 by means of a plurality of dilution air feed tubes 46 extending from a corresponding number of apertures 48 in the manifold 42, across the radial space between the flow shield 24 and liner 12, to a corresponding dilution air hole 44. Air feed tubes 46 are preferably secured by means of a conventional slip joint as best seen in FIGURE 2. Other suitable connections may also be employed.

In operation, compressor discharge air extracted from chamber 28 via ports 30 for introduction into the dilution zone 14D, may be carefully controlled by means of the dilution air control valve 34 which controls the amount of air permitted to flow into the common manifold 38. This predetermined amount of dilution air is then uniformly delivered to each of the plurality of combustion chambers 12 by means of connector pipes 40, manifolds 42 and feed tubes 46. In this way. combustor emissions performance is optimized and the levels of pollutants in the machine exhaust reduced.

In accordance with one exemplary embodiment. as much as about 20% of compressor discharge air can bypass the reaction zone of the combustion chamber by entering via the air dilution holes.

Thus, the invention as described allows control of the percentage of air used for dilution, while necessarily also controlling the percentage of air entering the combustion reaction zone utilizing a minimum of hardware, with all serviceable parts located externally of the pressure vessel for ease of maintenance.

While the invention has been described in connection with what is presently considered to be the most practical and preferred embodiment, it is to be understood that the invention is not to be limited to the disclosed embodiment, but on the contrary, is intended to cover various modifications and equivalent arrangements.

## Claims

1. A gas turbine combustion system which includes a plurality of combustors (10) within a pressure vessel (27), each combustor including a combustion liner (12) defining a combustion chamber (14) having a reaction zone (14R) and a dilution zone (14D), the liner (12) in the dilution zone (14D) provided with a plurality of circumferentially spaced dilution air feed holes (44); a now shield (24) surrounding each combustion liner (12) in radially spaced relation thereto for reverse flowing compressor discharge air around said liner (12) and Into the combustion chamber reaction zone (14R); an air staging apparatus for uniformly introducing a controlled amount of compressor discharge air Into each combustion chamber dilution zone (14D) via said dilution air feed holes (44) and CHARACTERIZED BY said air staging apparatus comprising a plurality of pressure vessel extraction ports (30) in said pressure vessel (27) downstream of said combustion liners (12) relative to flow through the combustion liners (12); a first manifold (38) externally surrounding said pressure vessel and connected to each of said extraction ports (30); a dilution air control valve (34) located between each extraction port (30) and said first manifold (38); and, a plurality of manifold connector pipes (40) each extending from said first manifold (38) into said pressure vessel (27) and Into communication with the dilution zone (14D) of a respective one of said combustion chambers (14) .

2. The gas turbine combustion system of claim 1 further including a plurality of second manifolds (42), each surrounding the flow shield (24) of a respective combustor (10) for supplying air from said manifold connector pipe (40) uniformly to said dilution zone via said plurality of dilution air feed holes (44).

3. The gas turbine combustion system of claim 1 including said pressure vessel (27) being provided with between 4 and 6 extraction ports (30).

4. The gas turbine combustion system of claim 1 including said dilution air control valves (34) being effective to divert about 20% of compressor discharge air available for combustion to the combustor dilution zone (14D).

5. The gas turbine combustion system of claim 1 including said plurality of pressure vessel extraction ports (30) being located downstream of said combustion liner (12) in a chamber (28) between said liner (12) and an associated gas turbine (22).

## Patentansprüche

1. Gasturbinen-Verbrennungssystem, das mehrere Brenner (10) in einem Druckbehälter (27) aufweist, wobei jeder Brenner eine Verbennungsauskleidung (12) enthält, die eine Brennkammer (14) mit einer Reaktionszone (14R) und einer Verdünnungszone (14D) bildet, wobei die Auskleidung (12) in der Verdünnungszone (14D) mit mehreren auf dem Unfang im Abstand angeordneten Verdünnungsluft-Zuführlöchern (44) versehen ist; eine Strömungsabschirmung (24), die jede Verbrennungsauskleidung (12) mit radialem Abstand dazu umgibt für eine Rückwärtsströmung von Verdichterausgangsluft um die Auskleidung (12) herum und in die Reaktionszone (14R) der Brennkammer; eine Luftabstufungseinrichtung zum gleichförmigen Einführen einer gesteuerten Menge von Verdichterausgangsluft in jede Verdünnungszone (14D) der Brennkammer über die verdünnungsluft-Zuführlöcher (44), dadurch gekennzeichnet, daß die Luftabstufungseinrichtung mehrere Druckbehälter-Entnahmeöffnungen (30) in dem Druckbehälter (27) stromabwärts von den verbrennungsauskleidungen (12) relativ zu der Strömung durch die Verbennungsauskleidung (12) aufweist; ein erster Verteiler (38) außen den Druckbehälter umgibt und mit jeder der Entnahmeöffnungen (30) verbunden ist; ein Verdünnungsluft-Steuerventil (34) zwischen jeder Entnahmeöffnung (30) und dem ersten Verteiler (38) angeordnet ist; und mehrere verteiler-Verbinderleitungen (40) sich jeweils von dem ersten Verteiler (38) in den Druckbehälter (27) und in Verbindung mit der Verdünnungszone (414D) von einer entsprechenden der Brennkammern (14) erstrecken.

2. Gasturbinen-Verbrennungssystem nach Anspruch 1, wobei ferner mehrere zweite Verteiler (42) vorgesehen sind, die jeweils die Strömungsabschirmung (24) von einem entsprechenden Brenner (10) umgeben, um Luft aus der Verteiler-Verbinderleitung (40) der Verdünnungszone über mehrere Verdünnungsluft-Zufuhrlöcher (44) gleichförmig zuzuführen.

3. Gasturbinen-Verbrennungssystem nach Anspruch 1, wobei der Druckbehälter (27) mit zwischen 4 und 6 Extraktionsöffnungen (30) versehen ist.

4. Gasturbinen-Verbrennungssystem nach Anspruch 1, wobei die Verdünnungsluft-Steuerventile (34) wirksam sind, um etwa 20% der Verdichterausgangsluft, die für die Verbrennung zur Verfügung steht, zu der Brenner-Verdünnungszone (14D) abzuleiten.

5. Gasturbinen-Verbrennungssystem nach Anspruch 1, wobei die mehreren Druckbehälter-Entnahmeöffnungen (30) stromabwärts von der Verbrennungsauskleidung (12) in einer Kammer (28) zwischen der Auskleidung (12) und einer zugeordneten Gasturbine (22) angeordnet sind.

## Revendications

1. Système de combustion de turbine à gaz qui comprend une pluralité de chambres de combustion (10) à l'intérieur d'une enveloppe (27) sous pression, chaque chambre de combustion comprenant une chemise (12) de chambre de combustion définissant un espace de combustion (14) comportant une zone de réaction (14R) et une zone de dilution (14D), la chemise (12) dans la zone de dilution (14D) étant pourvue d'une pluralité de trous (44) d'alimentation en air de dilution, espacés circonférenciellement; un écran (24) de canalisation d'écoulement entourant chaque chemise (12) de chambre de combustion en en étant espacé radialement pour faire circuler en sens inverse l'air de décharge du compresseur autour de ladite chemise (12) et l'introduire dans la zone de réaction (14R) de l'espace de combustion; un appareil d'étagement d'air pour introduire, d'une façon uniforme, une quantité réglée d'air de décharge de compresseur dans chaque zone de dilution (14D) d'espace de combustion par l'intermédiaire desdits trous (44) d'alimentation en air de dilution et caractérisé en ce que ledit appareil d'étagement d'air comprend une pluralité d'orifices d'extraction (30) dans ladite enveloppe (27) sous pression, en aval desdites chemises (12) de chambre de combustion par rapport à l'écoulement à travers les chemises (12) de chambre de combustion; un premier collecteurs-distributeur (38) entourant extérieurement ladite enveloppe sous pression et raccordé à chacun des orifices d'extraction (30); une vanne (34) de réglage d'air de dilution située entre chaque orifice d'extraction (30) et ledit premier collecteur-distributeur (38); et une pluralité de tubulures (40) de raccordement de collecteur-distributeur s'étendant chacun depuis ledit premier collecteur-distributeur ( 38) jusque dans ladite enveloppe sous pression (27) et communiquant avec la zone de dilution (14D) d'un espace de combustion correspondant parmi lesdits espaces de combustion (14).

2. Système de combustion de turbine à gaz selon la revendication 1, comprenant, en outre, une pluralité de seconds collecteur-distributeurs (42), chacun entourant l'écran (24) de canalisation d'écoulement d'une chambre de combustion correspondante (10) pour fournir l'air en provenance de ladite tubulure (40) de connexion de collecteur-distributeur, à ladite zone de dilution, d'une façon uniforme, par l'intermédiaire de ladite pluralité de trous (44) d'alimentation en air de dilution.

3. Système de combustion de turbine à gaz selon la revendication 1, dans lequel ladite enveloppe sous pression (27) est pourvue de 4 à 6 orifices d'extraction (30).

4. Système de combustion de turbine à gaz, dans lequel lesdites vannes (34) de commande d'air de dilution ont pour rôle de détourner environ 20% de l'air de décharge du compresseur disponible pour la combustion dans la zone de dilution (14D) de chambre de combustion.

5. Système de combustion de turbine à gaz selon la revendication 1, dans lequel ladite pluralité d'orifices d'extraction (30) d'enveloppe sous pression se trouve en aval de ladite chemise (12) de chambre de combustion dans un espace (28) entre ladite chemise (12) et une turbine à gaz associée (22).
